# EUROPEAN PATENT SPECIFICATION

(11) **EP 4 510 370 B1**
(45) Date of publication and mention of the grant of the patent: **01.04.2026**
(21) Application number: 23812224.6
(22) Date of filing: 03.04.2023
(51) Int. Cl.: H01M 50/591, H01M 50/593, H01M 50/211, H01M 50/296, H01M 50/271

(54) **BATTERY MODULE**
BATTERIEMODUL
MODULE DE BATTERIE

(30) Priority: 23.05.2022 KR 20220063117; 28.03.2023 KR 20230040788
(43) Date of publication of application: 19.02.2025
(73) Proprietor: LG Energy Solution, Ltd., Seoul 07335 (KR)
(72) Inventor: JUNG, Ki Taek, Daejeon 34122 (KR); PARK, Jun Kyu, Daejeon 34122 (KR)
(74) Representative: Plasseraud IP
(86) International application number: PCT/KR2023/095016
(87) International publication number: WO 2023/229450

(56) References cited:
- EP-A1- 3 772 124
- WO-A1-2022/065673
- JP-A- 2015 125 799
- KR-A- 20150 086 925
- KR-A- 20200 055 334
- KR-A- 20220 039 301
- KR-A- 20220 043 543
- US-A1- 2022 102 804

## Description

### TECHNICAL FIELD

The present invention relates to a battery module, and more particularly, to a battery module including a plurality of cells.

### BACKGROUND ART

### Prior art documents:

EP 3 772 124 A1

WO2022/065673A1 and US2022/102804

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

Batteries storing electrical energy may be generally classified into primary batteries and secondary batteries. Such a primary battery is a disposable consumable battery. On the other hand, such a secondary battery is a chargeable battery that is manufactured by using a material in which oxidation and reduction processes between current and the material are capable of being repeated. That is, when the reduction reaction to the material is performed by the current, power is charged. When the oxidation reaction to the material is performed by the current, power is discharged. Such charging-discharging are repeatedly performed to generate electricity.

Recently, as the need for large-capacity structures in addition to the use as an energy storage source are increasing, demands for battery packs in which a plurality of secondary batteries or battery modules are aggregated is increasing, and thus, demands for battery modules are also increasing.

For safety, the battery module may include an insulating structure for insulating an assembly of cells disposed therein from a member such as a frame.

The insulating structure may require a configuration for preventing short circuit from occurring in a terminal exposed to the outside of the battery in addition to a configuration that is disposed inside the battery module to insulate the assembly of the cells from the frame.

In related art, since the insulating structure for preventing the short circuit of the terminal from occurring is a separate component, it was not easy to be stored and was likely to be lost when being separated. In addition, there was also a problem in that it is difficult to be applied to various types of terminals.

In order to solve these problems, the battery module including a different type of separating structure is required.

### DISCLOSURE OF THE INVENTION

### TECHNICAL PROBLEM

The present invention is devised to solve the above problems. Specifically, an object of the present invention is to provide a battery module including an insulating member that is provided as a configuration capable of preventing short circuit of a terminal from occurring, has no risk of loss, is capable of being applied to various types of terminals, and is reusable for other products even after a lifespan of the battery module is over.

### TECHNICAL SOLUTION

The battery module according to the present invention includes the cell stack, in which the plurality of cells are stacked, the body part surrounding the cell stack, the endplate blocking the opening of the body part and disposed on the front and rear surfaces of the cell stack, and the insulating member disposed between the cell stack and the body part, and the insulating member includes the terminal cover having the shape extending to the outside of the body part.

The body part may include: a top plate disposed above the cell stack; and a frame configured to surround bottom and side surfaces of the cell stack.

The cell stack may include a terminal extending to the outside of the body part so as to be electrically connected to the outside, and the endplate comprises a terminal frame disposed below the terminal.

The terminal cover may have the same width as a width of the terminal frame.

The terminal cover may be configured to surround opened top and front surfaces of the terminal.

The terminal cover may be configured to open the top and front surfaces of the terminal, which are surrounded, so as to be in contact with the outside.

The terminal cover may include: a horizontal portion extending in a direction parallel to an extension direction of the terminal to surround the opened top surface of the terminal; and a vertical portion extending in a direction perpendicular to the horizontal portion to surround the opened front surface of the terminal.

The terminal cover may have a shape corresponding to that of the terminal.

The terminal cover may include an elastic material so that a shape thereof is deformed and restored.

When force is applied, the terminal cover may be deformed, and the deformed shape may be maintained.

The insulating member may include an insulating film.

A battery module includes: a cell stack including a plurality of cells and a terminal protruding in a direction away from the cells so that the cells are electrically connected to the outside; a body part having a shape of which both ends in a longitudinal direction of the cell stack are opened so that the cell stack is accommodated; and an insulating member configured to insulate the cell stack, wherein the insulating member includes: an upper plate disposed between a top surface of the cell stack and the body part to insulate the cell stack from the body part; and a terminal cover extending from the upper plate in a direction away from the cell stack to cover the terminal.

The terminal cover may have a melting point higher than that of the terminal.

The battery module may further include an endplate configured to block both the opened ends of the body part and having a through-hole, through which the terminal passes, at a position corresponding to that of the terminal.

The terminal cover may pass through the through-hole to cover the terminal.

### ADVANTAGEOUS EFFECTS

The battery module according to the present invention may include the cell stack, in which the plurality of cells are stacked, the body part surrounding the cell stack, the endplate blocking the opening of the body part and disposed on the front and rear surfaces of the cell stack, and the insulating member disposed between the cell stack and the body part, and the insulating member may include the terminal cover having the shape extending to the outside of the body part.

Thus, the insulating member may be provided as the configuration capable of preventing the short circuit of the terminal from occurring, have no risk of loss, be capable of being applied to the various types of terminals, and be reusable for other products even after the lifespan of the battery module is over.

In addition, the separate components may be coupled as one component to improve the efficiency and efficiency of the operation and the manufacturing process.

### BRIEF DESCRIPTION OF THE DRAWINGS

FIG. 1 is a schematic exploded perspective view of a battery module according to Embodiment 1 of the present invention.
FIG. 2 is a schematic perspective view illustrating an insulating member of the battery module according to Embodiment 1 of the present invention.
FIG. 3 is a schematic plan view illustrating the insulating member of the battery module when viewed from the above according to Embodiment 1 of the present invention.
FIG. 4 is a schematic perspective view illustrating a state in which a terminal cover of the insulating member is disposed on a terminal according to Embodiment 1 of the present invention.
FIG. 5 is a schematic perspective view illustrating a state in which the terminal cover of the insulating member is opened according to Embodiment 1 of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

### Embodiment 1

The present invention provides a battery module as Embodiment 1.

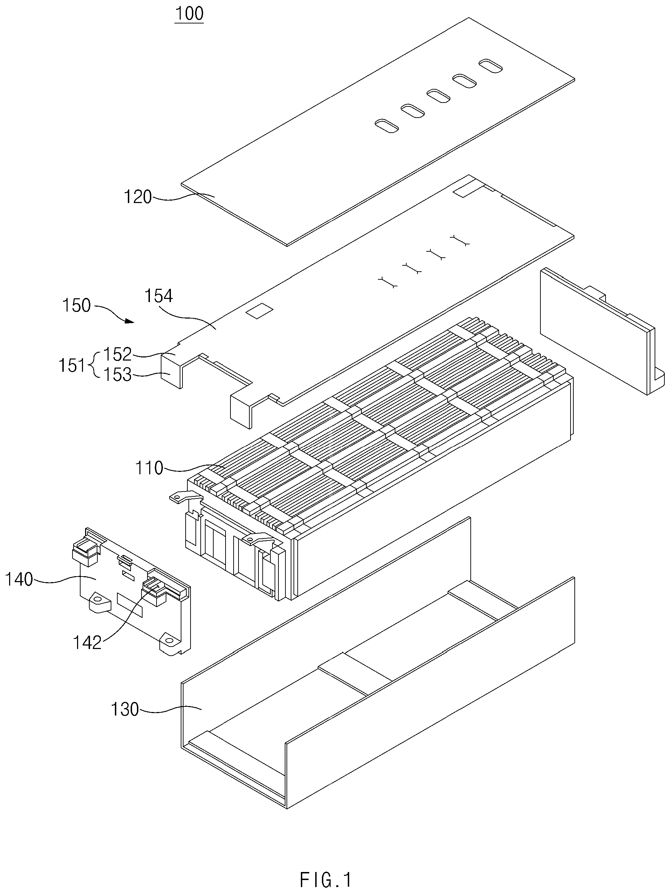

FIG. 1 is a schematic exploded perspective view of a battery module 100 according to Embodiment 1 of the present invention.

Referring to FIG. 1, the battery module 100 according to Embodiment 1 of the present invention may include a cell stack 110, a body part, an endplate 140, and an insulating member 150.

The cell stack 110 of the battery module 100 may be provided by stacking a plurality of cells. Each of the cells may mean one secondary battery, and here, the cell may be a pouch cell. Specifically, the cell stack 110 may be provided by stacking the plurality of cells side by side so as to be parallel to each other.

The cell stack 110 may generate electrical energy of the battery module 100. As an example of a configuration for emitting electrical energy generated by the cell stack 110 to the outside, the cell stack 110 of the battery module 100 according to Embodiment 1 of the present invention may include a terminal 111.

The terminal 111 may be provided to extend to the outside of the body part for electrical connection to the outside. Specifically, the terminal 111 may extend to the outside of the frame 130 to be described later. More specifically, the terminal 111 may have a shape extending in a direction that is away from the body.

The terminals 111 according to Embodiment 1 of the present invention may be provided in a pair, which are provided as a negative electrode and a positive electrode, respectively. Also, the terminal 111 may have an approximate rectangular parallelepiped shape.

The body part of the battery module 100 may be provided to surround the cell stack 110. The body part may include a top plate 120 and a frame 130.

The top plate 120 provided in the body part may be disposed above the cell stack 110.

The top plate 120 may have a substantially rectangular parallelepiped plate shape, and a surface of the top plate 120, which faces the cell stack 110, may have approximately the same area as the bottom surface of the frame 130.

The cell stack 110 may be protected from the outside by the top plate 120.

The cell stack 110 may be disposed inside the frame 130 provided in the body part. Here, the frame 130 may be disposed to surround a bottom surface and a side surface of the cell stack 110. The frame 130 according to Embodiment 1 of the present invention may have a U-shape when viewed from the front.

The cell stack 110 may be disposed inside the battery module 100 while being maintained its shape by the frame 130 and may be protected from the outside.

The endplate 140 of the battery module 100 may be disposed on front and rear surfaces of the cell stack 110 while blocking an opening of the frame 130 in which the cell stack 110 is disposed.

The endplate 140 may have a substantially rectangular parallelepiped plate shape on the whole and may be formed as a pair that are respectively disposed on the front and rear surfaces of the cell stack 110.

The cell stack 110 may be protected from the outside by the endplate 140.

As an example of a configuration for disposing the terminal 111 of the cell stack 110, the endplate 140 of the battery module 100 according to Embodiment 1 of the present invention may include a terminal frame 141.

The terminal frame 141 may be disposed below the terminal 111 and may be provided in a form surrounding a bottom surface and a portion of a side surface of the terminal 111. That is, the terminal frame 141 of the endplate 140 may be a disposed at a position at which the protruding terminal 111 of the cell stack 110 is disposed.

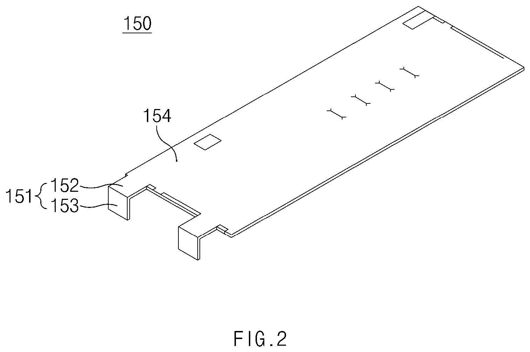

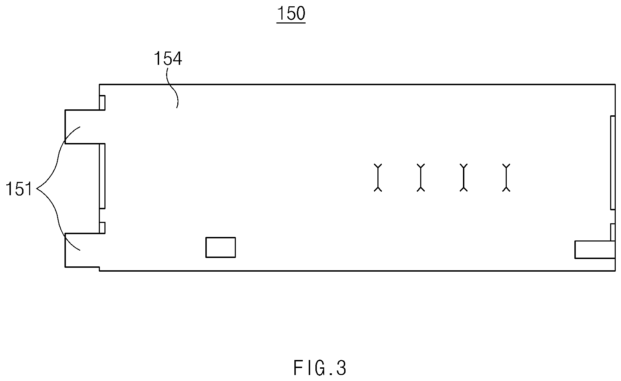

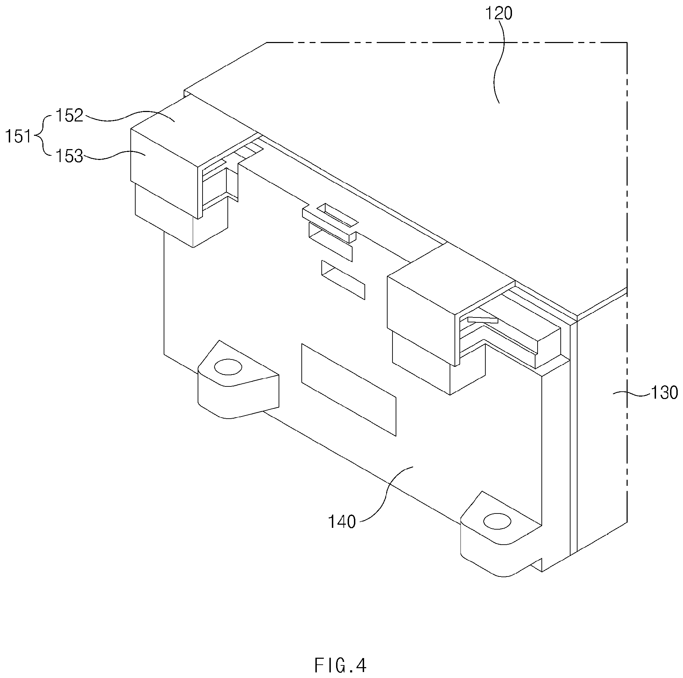

FIG. 2 is a schematic perspective view illustrating the insulating member 150 of the battery module 100 according to Embodiment 1 of the present invention, and FIG. 3 is a schematic plan view illustrating the insulating member 150 of the battery module 100 when viewed from the above according to Embodiment 1 of the present invention. FIG. 4 is a schematic perspective view illustrating a state in which a terminal cover 151 of the insulating member 150 is disposed on the terminal 111 according to Embodiment 1 of the present invention.

The battery module 100 may include an insulating structure for preventing defects, which may occur while electricity flows between the cells disposed therein and other components, from occurring. As an example of a configuration for the insulation, the battery module 100 according to Embodiment 1 of the present invention may include the insulating member 150.

Referring to FIGS. 2 and 3, the insulating member 150 may be provided in the form of a thin plate having insulating properties, and the insulating member 150 may be an insulating film. In addition, the insulating member 150 may be disposed on an outer surface of the cell stack 110.

As an example of a configuration for protecting the terminal 111 of the cell stack 110, the insulating member 150 of the battery module 100 according to Embodiment 1 of the present invention includes an upper plate 154 and a terminal cover 151.

The upper plate 154 of the insulating member 150 may be disposed between the cell stack 110 and the body part surrounding the cell stack 110. Specifically, the insulating member 150 may be disposed between a top surface of the cell stack 110 and the top plate 120. The upper plate 154 may have a plate shape having a substantially rectangular cross-section.

The terminal cover 151 of the insulating member 150 may have a shape extending from the upper plate 154 to the outside of the body. When viewing the battery module 100 downward from the above, a portion that is not covered by the top plate 120 may be the terminal cover 151.

Referring to FIG. 3, the terminal cover 151 of the insulating member 150 when viewed from the above may have a substantially rectangular shape.

Since the terminal 111 according to Embodiment 1 of the present invention is provided in a pair, the terminal cover 151 may also be provided in a pair to protect each terminal 111.

The terminal cover 151 of the insulating member 150 may prevent short circuit that may occur due to contact between the terminal 111 and another external conductor during storage and transportation of the battery module 100, and may protect the terminal 111 from external physical factors to improve stability of the battery module 100.

As an example of a configuration for efficiently protecting the terminal 111, the terminal cover 151 of the insulating member 150 according to Embodiment 1 of the present invention may have the same width as that of the terminal frame 141.

Referring to FIG. 4, the terminal cover 151 may be provided to have the same width as that of the terminal frame 141. Here, the width may mean a direction perpendicular to a direction in which the terminal cover 151 extends to the outside of the frame 130.

When the width of the terminal cover 151 has the same width as the width of the terminal frame 141, the terminal cover 151 may easily cover the terminal 111 disposed above the terminal frame 141 to more easily protect the terminal 111, and also, when the terminal cover 151 is disposed, the terminal cover 141 may be relatively less disturbed by other components so that the assembly during the manufacturing may be simple.

As an example of a configuration for covering an opened portion of the terminal 111, the terminal cover 151 of the insulating member 150 according to Embodiment 1 of the present invention may include a horizontal portion 152 and a vertical portion 153.

Specifically, the horizontal portion 152 and the vertical portion 153 of the terminal cover 151 may cover open top and front surfaces of the terminal 111.

Referring to FIG. 4, the horizontal portion 152 may extend in a direction parallel to the extension direction of the terminal 111 and may be disposed to surround the opened top surface of the terminal 111, and the vertical portion 153 may extend in a direction perpendicular to the horizontal portion 152 and may be disposed to surround the opened front surface of the terminal 111. Here, the vertical portion 153 may be provided to extend downward as illustrated in FIG. 4.

When the terminal cover 151 includes the horizontal portion 152 and the vertical portion 153, the opened top and front surfaces of the terminal 111 may be effectively covered, which is advantageous for protecting the terminal 111.

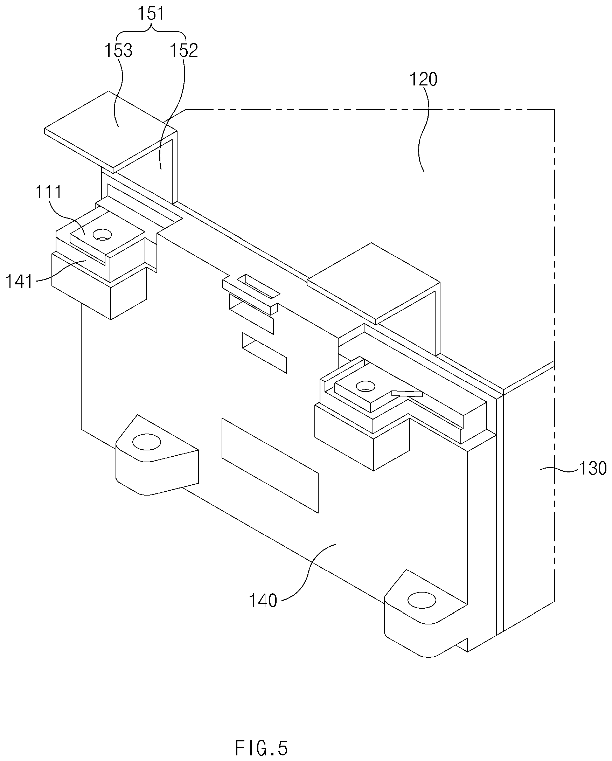

FIG. 5 is a schematic perspective view illustrating a state in which the terminal cover 151 of the insulating member 150 is opened according to Embodiment 1 of the present invention.

Referring to FIG. 5, the terminal cover 151 according to Embodiment 1 of the present invention may open the terminal 111 in a shape surrounding the terminal 111.

Specifically, the terminal cover 151 may be opened so that the top and front surfaces of the terminal 111 are in contact with the outside.

In addition to using of the battery module 100, it may be necessary to open the terminal 111 when checking performance and defects of the battery module 100 or when repairing the battery module 100. Here, the terminal cover 151 may be opened so that the top and front surfaces of the terminal 111 are in contact with the outside.

As an example of a configuration for opening, the terminal cover 151 of the insulating member 150 according to Embodiment 1 of the present invention may include an elastic material.

Specifically, the terminal cover 151 may be deformed and restored by including the elastic material. Thus, the shape of the terminal cover 151 covering the top and front surfaces of the terminal 111 may be modified as illustrated in FIG. 5 to open the terminal 111 to be in contact with the outside. In addition, when there is no need to open the terminal 111, the terminal cover 151 may be restored to its original state by elastic force to surround the terminal 111.

According to the present invention, there is no risk of losing the terminal cover 151 even when the terminal 111 is opened by modifying the shape of the terminal cover 151, and the terminal cover 151 may be reused.

Although not shown in the embodiments of the present invention, the battery module 100 may further include a component such as a synthetic resin for bonding between a bottom surface of the cell stack 110 and the frame 130.

Since the battery module 100 according to Embodiment 1 of the present invention includes the insulating member 150 in which the terminal cover 151 is integrally provided, the number of components may be reduced compared to the insulating member according to the related art and may be reused to improve economic feasibility. In addition, since the assembly of the battery module 100 is easy, the battery module 100 may improve efficiency of related operations and manufacturing processes.

### Embodiment 2

The present invention provides a battery module including a different type of insulating member as Embodiment 2.

Hereinafter, a detailed description of the same configuration as that of the battery module 100 according to Embodiment 1 of the present invention will be omitted.

The battery module according to Embodiment 2 of the present invention may include a cell stack 110, a top plate 120, a frame 130, and an endplate 140, which have the same shape as the battery module 100 according to Embodiment 1. However, the battery module according to Embodiment 2 may include an insulating member having a different form from the insulating member 150 of the battery module 100 according to Embodiment 1.

A terminal cover of the insulating member according to Embodiment 2 of the present invention may have a shape corresponding to that of a terminal 111.

Specifically, the terminal cover may be provided in a shape corresponding to the shape of the terminal 111 to cover the outside of the terminal 111.

When the terminal 111 has a substantially rectangular parallelepiped shape, and top, front, and side surfaces are opened from a terminal frame 141 in a state of being disposed above the terminal frame 141, the terminal cover according to Embodiment 2 may be provided to surround the top, front, and side surfaces of the terminal 111, and the terminal 111 may be disposed inside the terminal cover.

Similar to Embodiment 1, the terminal cover according to Embodiment 2 of the present invention may also open the terminal 111 in a form surrounding the terminal 111.

Specifically, the terminal cover may open the top, front, and side surfaces of the terminal 111, which are surrounded, so as to be in contact with the outside.

As an example of a method for opening the terminal 111, when force is applied to the terminal cover according to Embodiment 2 of the present invention, the terminal cover may be deformed.

Specifically, when the force is applied to the terminal cover, the shape of the terminal cover may be deformed, and the deformed shape may be maintained. For example, it may mean the same manner that when force is applied to a thin wire, its shape is deformed, and the deformed shape is maintained.

If the terminal 111 does not need to be in contact with the outside, when the force is applied again, the terminal cover deformed to open the terminal 111 may return to its original form surrounding the terminal 111 in a shape corresponding to the terminal 111.

When adding the description of the shape of the terminal cover, a portion of the terminal cover surrounding the side surface of the terminal 111 may be connected to the other portion of the terminal cover surrounding the front surface of the terminal 111. That is, the terminal cover deformed into a substantially flat shape by applying the force may have a shape similar to a portion of the developed rectangular parallelepiped.

The terminal cover enabling this method may be a thin plate-type film or the like.

Since the shape of the terminal cover according to Embodiment 2 is merely an example of the case in which the terminal 111 has the substantially rectangular parallelepiped shape, when the terminal has a different shape, the shape of the terminal cover may also be changed to correspond to the shape of the terminal.

### Embodiment 3

The present invention provides a battery module including a terminal cover 151 disposed in a different form as Embodiment 3.

Hereinafter, a detailed description of the same configuration as that of the battery module 100 according to Embodiments 1 and 2 of the present invention will be omitted.

The battery module according to Embodiment 2 of the present invention may include a cell stack 110, a top plate 120, a frame 130, and an endplate 140, which have the same shape as the battery module 100 according to Embodiment 1. However, the battery module according to Example 3 may include an insulating member disposed in a different form from the insulating member 150 of the battery module 100 according to Embodiments 1 and 2.

As described above, an endplate 140 may include a terminal frame 141 as an example of a configuration for disposing a terminal 111.

The terminal frame 141 may be disposed below the terminal 111 and may be provided in a form surrounding a bottom surface and a portion of a side surface of the terminal 111. Here, in order for the terminal 111 to be disposed on the terminal frame 141 of the endplate 140, the terminal 111 may be disposed to pass through the endplate 140.

A through-hole 142 may be defined in the endplate 140 of the battery module according to Embodiment 3 of the present invention to allow the terminal 111 to pass therethrough. Specifically, the through-hole 142 may be defined at a position corresponding to a position at which the terminal 111 is provided in the endplate 140. Also, the through-hole 142 may be provided to a size through which the terminal 111 may pass. Therefore, the terminal 111 protruding to the outside of a body part may pass through the through-hole 142 and be disposed on the terminal frame 141.

A terminal cover 151 of an insulating member 150 according to Embodiment 3 of the present invention may be disposed to pass through the through-hole 142. That is, the terminal cover 151 may cover the terminal 111 by passing through the through-hole 142 together with the terminal 111.

Since the terminal cover 151 disposed in this form may have a relatively wide contact area with the terminal 111, the terminal cover 151 may stably cover the terminal 111.

As an example of a configuration for improving stability in a manufacturing process, the terminal cover 151 of the insulating member 150 according to Embodiment 3 of the present invention may have a melting point higher than that of the terminal 111.

In a process of assembling the battery module, the terminal 111 may be welded to bond the terminal 111 to other members. Here, there is a possibility that the terminal cover 151 covering the terminal 111 is damaged. Therefore, in order to prevent the terminal cover 151 from being damaged, the terminal cover 151 may have a melting point higher than that of the terminal 111.

It is sufficient to have a melting point higher than the melting point of the terminal 111, and a material forming the terminal cover 151 may be various.

### [Description of the Symbols]

100: Battery module
110: Cell stack
111: Terminal
120: Top plate
130: Frame
140: Endplate
141: Terminal frame
142: Through-hole
150: Insulating member
151: Terminal cover
152: Horizontal portion
153: Vertical portion
154: Upper plate

## Claims

1. A battery module (100) comprising:
a cell stack (110), in which a plurality of cells are stacked;
a body part configured to surround the cell stack (110);
an endplate (140) configured to block an opening of the body part and disposed on front and rear surfaces of the cell stack (110); and
an insulating member (150) disposed between the cell stack (110) and the body part,
**characterised in that** the insulating member (150) comprises a terminal cover (151) having a shape extending to the outside of the body part.

2. The battery module (100) of claim 1, wherein the body part comprises:
a top plate (120) disposed above the cell stack (110); and
a frame (130) configured to surround bottom and side surfaces of the cell stack (110).

3. The battery module (100) of claim 1, wherein the cell stack (110) comprises a terminal (111) extending to the outside of the body part so as to be electrically connected to the outside, and
the endplate (140) comprises a terminal frame (141) disposed below the terminal (111).

4. The battery module (100) of claim 3, wherein the terminal cover (151) has the same width as a width of the terminal frame (141).

5. The battery module (100) of claim 3, wherein the terminal cover (151) is configured to surround opened top and front surfaces of the terminal (111).

6. The battery module (100) of claim 5, wherein the terminal cover (151) is configured to open the top and front surfaces of the terminal (111), which are surrounded, so as to be in contact with the outside.

7. The battery module (100) of claim 5, wherein the terminal cover (151) comprises:
a horizontal portion (152) extending in a direction parallel to an extension direction of the terminal to surround the opened top surface of the terminal (111); and
a vertical portion (153) extending in a direction perpendicular to the horizontal portion to surround the opened front surface of the terminal (111).

8. The battery module (100) of claim 3, wherein the terminal cover (151) has a shape corresponding to that of the terminal (111).

9. The battery module of claim 3, wherein the terminal cover (151) comprises an elastic material so that a shape thereof is deformed and restored.

10. The battery module of claim 3, wherein, when force is applied, the terminal cover (151) is deformed, and the deformed shape is maintained.

11. The battery module of claim 1, wherein the insulating member (150) comprises an insulating film.

12. A battery module (100) according to claim 1 further comprising a terminal (111) protruding in a direction away from the cells so that the cells are electrically connected to the outside;
wherein the body part has a shape of which both ends in a longitudinal direction of the cell stack (110) are opened so that the cell stack is accommodated; and
wherein the insulating member (150) comprises:
an upper plate (154) disposed between a top surface of the cell stack (110) and the body part to insulate the cell stack (110) from the body part; and
wherein the terminal cover (151) extends from the upper plate (154) in a direction away from the cell stack (110) to cover the terminal (111).

13. The battery module (100) of claim 12, wherein the terminal cover (151) has a melting point higher than that of the terminal (111).

14. The battery module (100) of claim 12, further comprising an endplate (140) configured to block both the opened ends of the body part and having a through-hole (142), through which the terminal (111) passes, at a position corresponding to that of the terminal.

15. The battery module (100) of claim 14, wherein the terminal cover (151) passes through the through-hole (142) to cover the terminal (111).

## Patentansprüche

1. Batteriemodul (100), umfassend:
einen Zellenstapel (110), in welchem eine Mehrzahl von Zellen gestapelt sind;
einen Körperteil, welcher dazu eingerichtet ist, den Zellenstapel (110) zu umgeben;
eine Endplatte (140), welche dazu eingerichtet ist, eine Öffnung des Körperteils zu blockieren, und an vorderen und hinteren Flächen des Zellenstapels (110) angeordnet ist; und
ein isolierendes Element (150), welches zwischen dem Zellenstapel (110) und dem Körperteil angeordnet ist,
**dadurch gekennzeichnet, dass** das isolierende Element (150) eine Anschlussabdeckung (151) umfasst, welche eine Form aufweist, welche sich zu der Außenseite des Körperteils erstreckt.

2. Batteriemodul (100) nach Anspruch 1, wobei der Körperteil umfasst:
eine obere Platte (120), welche oberhalb des Zellenstapels (110) angeordnet ist; und
einen Rahmen (130), welcher dazu eingerichtet ist, untere und seitliche Flächen des Zellenstapels (110) zu umgeben.

3. Batteriemodul (100) nach Anspruch 1, wobei der Zellenstapel (110) einen Anschluss (111) umfasst, welcher sich zu der Außenseite des Körperteils erstreckt, um so elektrisch mit der Außenseite verbunden zu sein, und die Endplatte (140) einen Anschlussrahmen (141) umfasst, welcher unterhalb des Anschlusses (111) angeordnet ist.

4. Batteriemodul (100) nach Anspruch 3, wobei die Anschlussabdeckung (151) dieselbe Breite wie eine Breite des Anschlussrahmens (141) aufweist.

5. Batteriemodul (100) nach Anspruch 3, wobei die Anschlussabdeckung (151) dazu eingerichtet ist, geöffnete obere und vordere Flächen des Anschlusses (111) zu umgeben.

6. Batteriemodul (100) nach Anspruch 5, wobei die Anschlussabdeckung (151) dazu eingerichtet ist, die oberen und vorderen Flächen des Anschlusses (111) zu öffnen, welche umgeben sind, um so in Kontakt mit der Außenseite zu sein.

7. Batteriemodul (100) nach Anspruch 5, wobei die Anschlussabdeckung (151) umfasst:
einen horizontalen Abschnitt (152), welcher sich in einer Richtung parallel zu einer Erstreckungsrichtung des Anschlusses erstreckt, um die geöffnete obere Fläche des Anschlusses (111) zu umgeben; und
einen vertikalen Abschnitt (153), welcher sich in einer Richtung senkrecht zu dem horizontalen Abschnitt erstreckt, um die geöffnete vordere Fläche des Anschlusses (111) zu umgeben.

8. Batteriemodul (100) nach Anspruch 3, wobei die Anschlussabdeckung (151) eine Form aufweist, welche derjenigen des Anschlusses (111) entspricht.

9. Batteriemodul nach Anspruch 3, wobei die Anschlussabdeckung (151) ein elastisches Material umfasst, so dass eine Form davon verformt und wiederhergestellt ist.

10. Batteriemodul nach Anspruch 3, wobei, wenn Kraft ausgeübt wird, die Anschlussabdeckung (151) verformt wird und die verformte Form beibehalten wird.

11. Batteriemodul nach Anspruch 1, wobei das isolierende Element (150) einen isolierenden Film umfasst.

12. Batteriemodul (100) nach Anspruch 1, ferner umfassend einen Anschluss (111), welcher in einer Richtung weg von den Zellen vorsteht, so dass die Zellen elektrisch mit der Außenseite verbunden sind;
wobei der Körperteil eine Form aufweist, von welcher beide Enden in einer longitudinalen Richtung des Zellenstapels (110) geöffnet sind, so dass der Zellenstapel aufgenommen ist; und
wobei das isolierende Element (150) umfasst:
eine obere Platte (154), welche zwischen einer oberen Fläche des Zellenstapels (110) und dem Körperteil angeordnet ist, um den Zellenstapel (110) von dem Körperteil zu isolieren; und
wobei sich die Anschlussabdeckung (151) von der oberen Platte (154) in einer Richtung weg von dem Zellenstapel (110) erstreckt, um den Anschluss (111) abzudecken.

13. Batteriemodul (100) nach Anspruch 12, wobei die Anschlussabdeckung (151) einen Schmelzpunkt aufweist, welcher höher als derjenige des Anschlusses (111) ist.

14. Batteriemodul (100) nach Anspruch 12, ferner umfassend eine Endplatte (140), welche dazu eingerichtet ist, beide der geöffneten Enden des Körperteils zu blockieren, und ein Durchgangsloch (142) aufweist, durch welches der Anschluss (111) hindurchtritt, an einer Position, welche derjenigen des Anschlusses entspricht.

15. Batteriemodul (100) nach Anspruch 14, wobei die Anschlussabdeckung (151) durch das Durchgangsloch (142) hindurchtritt, um den Anschluss (111) abzudecken.

## Revendications

1. Module de batterie (100) comprenant :
un empilement de cellules (110), dans lequel une pluralité de cellules sont empilées ;
une partie corps configurée pour entourer l'empilement de cellules (110) ;
une plaque d'extrémité (140) configurée pour bloquer une ouverture de la partie corps et disposée sur des surfaces avant et arrière de l'empilement de cellules (110) ; et
un élément isolant (150) disposé entre l'empilement de cellules (110) et la partie corps, **caractérisé en ce que** l'élément isolant (150) comprend un couvercle de borne (151) présentant une forme s'étendant vers l'extérieur de la partie corps.

2. Module de batterie (100) selon la revendication 1, dans lequel la partie corps comprend :
une plaque supérieure (120) disposée au-dessus de l'empilement de cellules (110) ; et
un cadre (130) configuré pour entourer des surfaces inférieure et latérale de l'empilement de cellules (110).

3. Module de batterie (100) selon la revendication 1, dans lequel l'empilement de cellules (110) comprend une borne (111) s'étendant vers l'extérieur de la partie corps de manière à être connectée électriquement à l'extérieur, et
la plaque d'extrémité (140) comprend un cadre de borne (141) disposé sous la borne (111).

4. Module de batterie (100) selon la revendication 3, dans lequel le couvercle de borne (151) a la même largeur qu'une largeur du cadre de borne (141).

5. Module de batterie (100) selon la revendication 3, dans lequel le couvercle de borne (151) est configuré pour entourer des surfaces supérieure et avant ouvertes de la borne (111).

6. Module de batterie (100) selon la revendication 5, dans lequel le couvercle de borne (151) est configuré pour ouvrir les surfaces supérieure et avant de la borne (111), qui sont entourées, de manière à être en contact avec l'extérieur.

7. Module de batterie (100) selon la revendication 5, dans lequel le couvercle de borne (151) comprend :
une portion horizontale (152) s'étendant dans une direction parallèle à une direction d'extension de la borne pour entourer la surface supérieure ouverte de la borne (111) ; et
une portion verticale (153) s'étendant dans une direction perpendiculaire à la portion horizontale pour entourer la surface avant ouverte de la borne (111).

8. Module de batterie (100) selon la revendication 3, dans lequel le couvercle de borne (151) présente une forme correspondant à celle de la borne (111).

9. Module de batterie selon la revendication 3, dans lequel le couvercle de borne (151) comprend un matériau élastique de sorte qu'une forme de celui-ci est déformée et restaurée.

10. Module de batterie selon la revendication 3, dans lequel, lorsqu'une force est appliquée, le couvercle de borne (151) est déformé, et la forme déformée est maintenue.

11. Module de batterie selon la revendication 1, dans lequel l'élément isolant (150) comprend un film isolant.

12. Module de batterie (100) selon la revendication 1 comprenant en outre une borne (111) faisant saillie dans une direction à l'opposé des cellules de sorte que les cellules sont électriquement connectées à l'extérieur ;
dans lequel la partie corps présente une forme dont les deux extrémités dans une direction longitudinale de l'empilement de cellules (110) sont ouvertes de sorte que l'empilement de cellules est logé ; et
dans lequel l'élément isolant (150) comprend :
une plaque supérieure (154) disposée entre une surface supérieure de l'empilement de cellules (110) et la partie corps pour isoler l'empilement de cellules (110) vis-à-vis de la partie corps ; et
dans lequel le couvercle de borne (151) s'étend à partir de la plaque supérieure (154) dans une direction à l'opposé de l'empilement de cellules (110) pour recouvrir la borne (111).

13. Module de batterie (100) selon la revendication 12, dans lequel le couvercle de borne (151) présente un point de fusion supérieur à celui de la borne (111).

14. Module de batterie (100) selon la revendication 12, comprenant en outre une plaque d'extrémité (140) configurée pour bloquer les deux extrémités ouvertes de la partie corps et présentant un trou traversant (142), à travers lequel passe la borne (111), à une position correspondant à celle de la borne.

15. Module de batterie (100) selon la revendication 14, dans lequel le couvercle de borne (151) passe à travers le trou traversant (142) pour recouvrir la borne (111).
